Europäisches Patentamt

European Patent Office

Office européen des brevets

(19)

(11) Veröffentlichungsnummer: **0 289 799**
**B1**

(12) **EUROPÄISCHE PATENTSCHRIFT**

(45) Veröffentlichungstag der Patentschrift:
08.08.90

(51) Int. Cl.⁵: **B23D 19/08**

(21) Anmeldenummer: **88105583.4**

(22) Anmeldetag: **08.04.88**

(54) Kreismesserschere zum Besäumen von Flachmaterial, insbesondere von Blechen und Bändern aus Metall.

(30) Priorität: **07.05.87 DE 3715193**

(43) Veröffentlichungstag der Anmeldung:
**09.11.88 Patentblatt 88/45**

(45) Bekanntmachung des Hinweises auf die Patenterteilung:
**08.08.90 Patentblatt 90/32**

(84) Benannte Vertragsstaaten:
**AT BE DE FR NL**

(56) Entgegenhaltungen:
**DE-A- 3 421 331**
**DE-B- 1 094 074**
**FR-A- 1 500 595**
**US-A- 545 131**
**US-A- 870 301**

(73) Patentinhaber: **SMS SCHLOEMANN-SIEMAG AKTIENGESELLSCHAFT,**
**Eduard-Schloemann-Strasse 4, D-4000 Düsseldorf 1(DE)**

(72) Erfinder: **Fritz, Manfred, Narzissenstrasse 28,**
**D-4006 Erkrath(DE)**
Erfinder: **de Kock, Peter, Im Fuhlenbrock 157,**
**D-4250 Bottrop(DE)**

(74) Vertreter: **Müller, Gerd et al, Patentanwälte**
**HEMMERICH-MÜLLER-GROSSE-POLLMEIER-MEY**
**Hammerstrasse 2, D-5900 Siegen 1(DE)**

ACTORUM AG

## Beschreibung

Die Erfindung betrifft eine Kreismesserschere nach dem Oberbegriff des Patentanspruches 1 und geht damit von einem in der Praxis bekanntgewordenen neueren Stand der Technik aus, bei dem der Messerspalt und die Messerüberdeckung nach Erfahrungswerten durch zwei verschiedene Einstellmechanismen motorisch oder manuell eingestellt werden können. Unter dem Messerspalt versteht man den im wesentlichen waagerechten Abstand zwischen den Schneidkantenebenen der Kreismesser, der üblicherweise mit zunehmender Materialdicke größer gewählt wird, um saubere Schneidkanten zu erhalten. Die Messerüberdeckung ist das Maß des vertikalen Abstandes der Schneidkanten der Kreismesser während des Schnittes, wobei die Messerüberdeckung positiv ist, wenn sich die Kreismesser in der waagerechten Projektion tatsächlich im Schneidbereich überdecken. Aufgrund von Erfahrungswerten ist die Gesetzmäßigkeit vorgegeben, daß der Messerspalt bei zunehmender Dicke von Stahl-Blechen oder -Bändern etwa linear und die Messerüberdeckung von einer relativ kleinen Banddicke von 1,4 mm beginnend von einer maximalen positiven Messerüberdeckung über Null in einen Bereich der negativen Messerüberdeckung in Abhängigkeit von der Messerspalteinstellung in einer Kurve ansteigt.

Unterhalb einer Banddicke von etwa 1,4 mm bis herab zu einer Banddicke von 0,2 mm geht die optimale positive Messerüberdeckung mit dem abnehmenden Messerspalt annähernd auf Null zurück. Die Einstellung von Messerüberdeckung in Abhängigkeit von dem Messerspalt, der wiederum von der Materialdicke abhängig ist, wird im folgenden als die von der Materialdicke abhängige Schneidkanteneinstellung bezeichnet.

Zum Stand der Technik ist auf die DE-A 3 421 331 hinzuweisen, nach der zur Erzeugung gerader und rechtwinkliger Schnittkanten die zur Blechoberfläche geneigte obere Kreismesserwelle mit ihrem messerfreien Ende zusätzlich um einen Winkel entgegengesetzt zur Blechförderrichtung verschwenkt ist. Zur Anpassung an wechselnde Blechdicken eines größeren Blechdickenbereichs sollen sowohl der im wesentlichen in senkrechter Ebene liegende Neigungswinkel als auch der im wesentlichen horizontal liegende Verschwenkwinkel im Betrieb verstellbar sein. Zur Anpassung der Kreismesserschere an verschiedene Blechdicken soll die untere Kreismesserwelle und ggf. auch die obere Kreismesserwelle in Verstellexzentern gelagert sein.

Der Erfindung liegt die Aufgabe zugrunde, eine Kreismesserschere insbesondere zum Besäumen von Blechen und Bändern aus Metall zu schaffen, bei der die von der Materialdicke abhängige Schneidkantenstellung hinsichtlich Messerspalt und Messerüberdeckung vereinfacht ist. Die Lösung dieser Aufgabe besteht aus den kennzeichnenden Merkmalen des Patentanspruches 1.

Durch die Ausbildung des Obermesserträgers als Koppel eines Gelenkvierecks (Lueger: Lexikon der Technik, Band 1, 1960 Seite 154) wird die Möglichkeit genutzt, durch Auslegung von Abmessungen der Gelenkteile und des Drehbereichs der Kurbel mit einer bestimmten Stelle der Koppel eine gewünschte Raumkurve, die sogenannte Koppelkurve, zu beschreiben. Im vorliegenden Falle, in dem bei feststehendem unteren Kreismesser das obere Kreismesser mit seiner Schneidkante einer durch die Erfahrungswerte vorgegebenen Kurve der Schneidenanstellung folgen soll, ist diese Stelle praktisch das Ende einer Verlängerung der Koppel über das Gelenk zwischen Koppel und Kurbel hinaus. Die Kurbel des Gelenkvierecks besteht aus einem quer zu den Kreismesserwellen verlaufenden Exzenter, womit auf baulich einfache Art und Weise der Obermesserträger als Koppel mit dem Untermesserträger als Gestell des Gelenkvierecks verbunden werden kann. Der Querexzenter greift am messerseitigen Ende des Obermesserträgers an, so daß seine Drehverstellung den Verlauf sowie die Größenordnung der Schneidenanstellung bestimmt. Letztlich ergibt sich aus der erfindungsgemäßen Anwendung eines Koppelkurvengetriebes, das durch ein und dasselbe Verstellelement, nämlich die Kurbel bzw. der Querexzenter, sowohl der Messerspalt als auch die Messerüberdeckung materialdickenabhängig eingestellt werden können. Es erübrigen sich Verstellexzenter innerhalb der Messergehäuse zur relativen Höhenverstellung der Kreismesserwellen, die nunmehr in Wälzlagern unverstellbar gelagert werden können, da der Messerspalt durch eine Koppelbewegung des Obermesserträgers, die im wesentlichen von der Größe des Exzenterhubes des Querexzenters bestimmt wird, vergrößert und verkleinert werden kann. Indessen ist die Neigung der oberen Kreismesserwelle im Sinne der DE-A 3 421 331 für die Funktion der erfindungsgemäßen Schneidenanstellung nicht erforderlich. So könnte beispielsweise der Obermesserträger mit dem Untermesserträger sowie die Kurbel mit der Schwinge ein Parallelkurbelgetriebe als Sonderfall des Gelenkvierecks bilden, so daß der Obermesserträger quasi "parallel zu sich selbst" bewegt wird.

Dann ist die von der Schneidkante des oberen Kreismessers beschriebene Raumkurve ein Kreisbogen, der näherungsweise der gewünschten Raumkurve entspricht, die sich aus Erfahrungswerten ergibt.

Der Verstellbereich des Querexzenters ist zweckmäßig durch gehäuseseitige Anschläge begrenzt, um Fehlsteuerungen zu vermeiden, durch die die Kreismesser aneinandergefahren werden können und zu Bruch gehen.

In Weiterentwicklung des Lösungsprinzips gemäß der Erfindung wird zwischen der Schwinge des Gelenkvierecks und dem Obermesserträger ein (weiterer) Überlagerungsexzenter angeordnet, der unter Verwendung einer zwischen Hebeln verlaufenden längenveränderlichen Gewindestange getrieblich mit dem Querexzenter verbunden ist. Eine Längenveränderung der Gewindestange führt zu einer Relativverstellung zwischen Querexzenter und Überlagerungsexzenter mit der Folge, daß die gewünschte Raumkurve der Schneidenanstellung aus einer Mittellage unter Beibehaltung ihrer Charakteristik nach oben oder unten verschoben wird. Dies kann zur Anpassung an die Festigkeit und Zähigkeit des zu schneidenden Materials zweckmäßig sein.

Auch kann die längenveränderliche Gewindestange aus einer mittleren Anschlußlage unter gegenläufiger Änderung der Hebelarme, unter denen die Gewindestange an die beiden Exzenter angeschlossen ist, verlagerbar gemacht werden (Patentanspruch 4), vorzugsweise durch Umsetzen (Patentanspruch 5). Hierdurch kann die Charakteristik der gewünschten Raumkurve dadurch beeinflußt werden, daß diese quasi um einen mittleren Bereich verschwenkt wird.

Um den Messerwechsel zu erleichtern, ohne die Drehlage des oder der Exzenter verändern zu müssen, wird die Schwinge gemäß der weiteren Erfindung von einem Stellzylinder gebildet, dessen Kolbenstange normalerweise in Endlage verriegelt und zur Schnellöffnung der Kreismesser einziehbar ist. Durch die Schnellöffnung wird der Obermesserträger messerseitig so weit hochgeschwenkt, daß die Messerbefestigungen leicht gelöst werden können. Nach Einsatz geschliffener Messer kann die Kolbenstange des Stellzylinders bis zum Endanschlag wieder ausgefahren werden, womit die gleiche Schneideneinstellung wie zuvor erhalten wird. In diesem Zusammenhang ist zu erwähnen, daß bei der erfindungsgemäßen Kreismesserschere die Messer zweckmässig nur planseitig geschliffen werden und die vom Messerabschliff unabhängige Kreismesserbefestigung nach Anspruch 7 der DE-OS 3 421 331 verwendet wird.

Da in der Praxis Kreismesserbesäumscheren für Materialdicken von 0,2 mm für kaltgewalztes Band bis etwa 15 mm für warmgewalzte Bleche und Bänder eingesetzt werden, ist es verständlich, daß mit einem einzigen Querexzenter keine Kennlinie der Schneideneinstellung für den gesamten Dickenbereich zu verwirklichen ist. Zwar kann durch Wahl des Exzenterhubes und eine Veränderung der Totpunktlage ein und dieselbe Kreismesserschere den Materialdickenbereichen von 0,2 bis ca. 1,4 mm oder von ca. 1,4 bis 15 mm hinsichtlich der Schneideneinstellung optimal angepaßt werden, jedoch ist dies über den gesamten Materialdickenbereich nicht möglich, weil - wie eingangs ausgeführt - bei kleiner werdendem Messerspalt keine weitere Zunahme der positiven Messerüberdeckung erfolgen soll, sondern eine Abnahme der Messerüberdeckung bis letztlich auf annähernd Null. Die Kennlinie der Schneideneinstellung erfährt nach den Erfahrungswerten bei einer Banddicke von ca. 1,4 mm eine schroffe Umkehr.

Daher sieht die Erfindung zum Besäumen von kaltgewalzten Bändern mit einer Banddicke von 0,2 bis 3,5 mm die Ausführung des Querexzenters als Doppelexzenter nach dem Patentanspruch 7 vor. Durch die Aufeinanderfolge von Drehverstellungen des Innenexzenters und des äußeren Hauptexzenters mit dem Innenexzenter als Einheit kann eine Umkehr der Charakteristik der Kennlinie der Schneidenanstellung erhalten werden, wie in der Zeichnungsbeschreibung näher erläutert wird.

Weitere Einzelheiten hinsichtlich der Auslegung eines Doppelexzenters für kleine Banddicken sind in dem Patentanspruch 8 angegeben und werden ebenfalls in der Zeichnungsbeschreibung näher erläutert.

In der Zeichnung sind Ausführungsbeispiele einer Kreismesserschere gemäß der Erfindung dargestellt, und zwar zeigen

Fig. 1 eine schematische Darstellung einer Kreismesserbesäumschere mit einem Querexzenter,

Fig. 2 den Querexzenter in vergrößerter Darstellung,

Fig. 3 eine Darstellung der Schneidkantenbewegung für die in Fig. 1 dargestellte Kreismesserschere,

Fig. 4 eine weiterentwickelte Kreismesserschere in Seitenansicht,

Fig. 5 einen Schnitt nach der Linie V-V in Fig. 4,

Fig. 6 eine Ansicht der Schere nach Fig. 4 in Pfeilrichtung "X",

Fig. 7 einen Schnitt nach der Linie VII-VII in Fig. 6,

Fig. 8 eine Darstellung der Schneidkantenbewegung für die in Fig. 4 bis 7 dargestellte Kreismesserschere,

Fig. 9 eine Darstellung der Schneidkantenbewegung nach Fig. 8 mit durch Verschiebung geänderten Kennlinien,

Fig. 10 eine Darstellung der Schneidkantenbewegung nach Fig. 8 mit durch Verschwenken geänderten Kennlinien,

Fig. 11 die vergrößerte Darstellung eines Doppelexzenters zum Einsatz in eine Kreismesserschere nach Fig. 1 oder Fig. 5 bis 7,

Fig. 12 eine schematische Darstellung der Exzenterbewegungen des Doppelexzenters nach Fig. 11, und

Fig. 13 eine Darstellung der Schneidkantenbewegung bei Einsatz des Doppelexzenters nach Fig. 11.

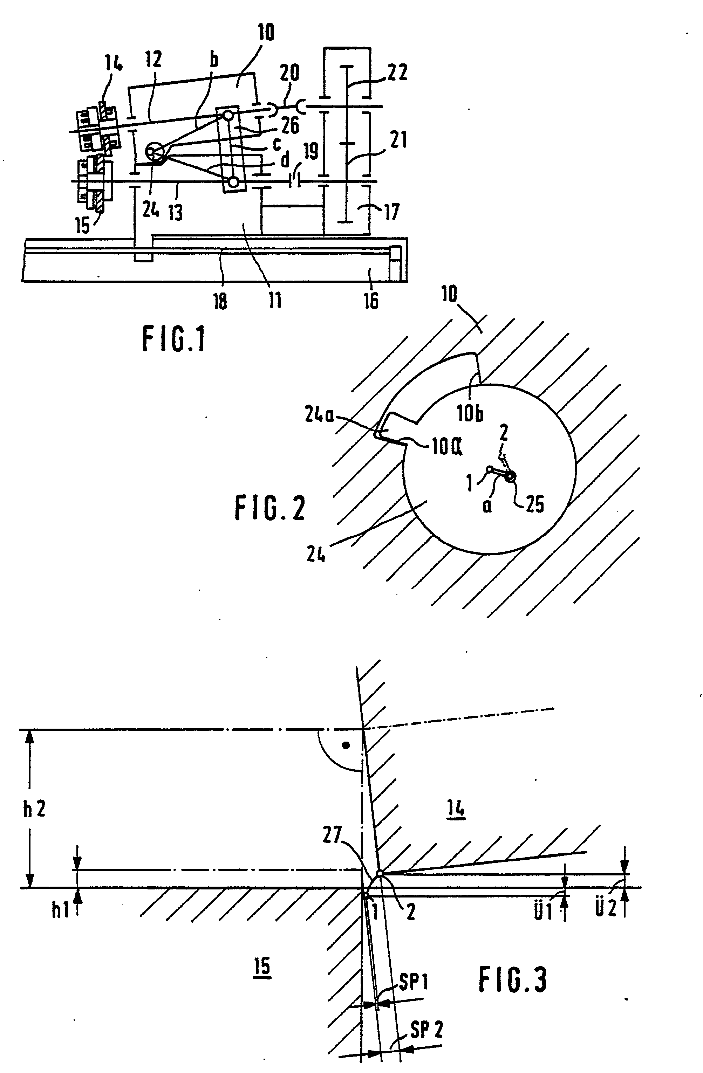

Die in Fig. 1 schematisch dargestellte Kreismesserbesäumschere besteht aus einem Obermessergehäuse 10, einem Untermessergehäuse 11, der im Obermessergehäuse 10 gelagerten oberen Kreismesserwelle 12 mit Kreismesser 14 und aus der im Untermessergehäuse 11 gelagerten unteren Kreismesserwelle 13 mit unterem Kreismesser 15.

Das Untermessergehäuse 11 ruht auf einer Sohlplatte 16, die auch ein Vorgelegegetriebe 17 aufnimmt. Das Untermessergehäuse 11 ist mit dem Obermessergehäuse 10 sowie dem Vorgelegegetriebe 17 als Einheit auf der Sohlplatte verschiebbar, wozu eine Gewindespindel 18 dient, die auch die nicht dargestellte andere Kreismesserbesäumschere zur Einstellung der Saumbreite verschiebt und von einem Getriebemotor angetrieben ist. Das Vorgelegegetriebe 17 dient der Synchronisation der Drehzahl der oberen und unteren Kreismesserwellen 12,13, die über eine Gelenkspindel 20 und eine starre Kupplung 19 mit dem Stirnradpaar 21,22 des Vorgelegegetriebes 17 verbunden sind. Die Kreismesserschere nach Fig.1 ist antriebslos, wenn die Kreismesser 14,15 durch die Vorschubbewegung des zu besäumenden Bandes in Drehung versetzt werden.

Das Obermessergehäuse 10 ist im Ausführungsbeispiel nach Fig.1 an seinem messerseitigen Ende über einen Querexzenter 24 mit dem feststehenden Untermesserträger 11 gelenkig verbunden, dessen Exzenterachse 25 (Fig.2) im Untermessergehäuse 11 gelagert ist. Am anderen Ende sind das Obermessergehäuse 10 und das Untermessergehäuse 11 mittels einer Stützschwinge 26 miteinander verbunden. Kinematisch gesehen ist somit das Obermessergehäuse 10 die Koppel b eines Gelenkvierecks a,b, c,d, wobei a die Kurbel bzw. Exzentrizität des Exzenters 24 ist (Fig.2), die Strecke b wie gesagt - die Koppel, die Strecke c die Schwinge und die Strecke d das sogenannte Gestell des Gelenkvierecks darstellen, wobei praktisch das Gestell d das Untermessergehäuse 11 ist.

Bekanntlich folgt bei einem Gelenkviereck jeder von der Schwinge c bzw. 26 entfernte Punkt der Koppel b und damit auch das Obermessergehäuse 10 einer sogenannten Koppelkurve, wenn die Kurbel a bzw. die Exzentrizität des Querexzenters 24 drehverstellt wird. Die Verhältnisse sind im Ausführungsbeispiel so getroffen, daß bei einer Teildrehung des Exzenters 24 um dessen im Untermesserträger 11 gelagerte Exzenterachse 12 der Mittelpunkt 1 des Querexzenters 24 zum Punkt 2 hinwandert, was nach Fig. 3 zu einer Bewegung der Schneidkante des teilweise dargestellten oberen Kreismessers 14 von 1 nach 2 entlang einer Koppel- bzw. Raumkurve 27 führt. In der Schneidkantenstellung 1 ist ein minimaler Messerspalt SP 1 und eine maximale positive Messerüberdeckung Ü 1 eingestellt, was der günstigsten Relation im bezug auf eine Dicke h 1 des zu besäumenden Materials nach Erfahrungswerten entspricht. Mit zunehmender Materialdicke wird der Querexzenter 24 um bestimmte Skalenwerte drehverstellt, um die Schneidkante des Obermessers auf einen Punkt der Raumkurve 27 zwischen 1 und 2 einzustellen. Für die maximale Materialdicke h 2 ist der Querexzenter 24 über seinen gesamten Verstellbereich im Uhrzeigersinn drehverstellt, wobei sich für diese größte Materialdicke ein großer Messerspalt SP 2 und eine maximale negative Messerüberdeckung Ü 2 einstellt, wie Fig. 3 zeigt.

Der Querexzenter 24 hat eine Nase 24a, über die der Verstellbereich des Querexzenters durch zwei gehäuseseitige Anschläge 10a und 10b begrenzt ist. Diese Begrenzung des Verstellbereichs des Querexzenters 24 ist vorgesehen, damit das Obermesser 14 nicht über die Schneidkantenstellung 1 hinaus an dem Untermesser 15 aufläuft und die Messer zu Bruch gehen. Der Anschlag 10b, der der Schneidkantenstellung 2 entspricht, soll die Raumkurve 27 begrenzen, deren Weiterführung aus kinematischen Gründen den vorgegebenen Einstellwerten nicht mehr entsprechen kann.

Dies ist auch der Grund dafür, daß die in Fig.1 dargestellte Kreismesserschere mit nur einem Querexzenter 24 hinsichtlich der Schneidkanteneinstellung für einen Dickebereich von 1,4 bis 12,7 mm ausgelegt ist.

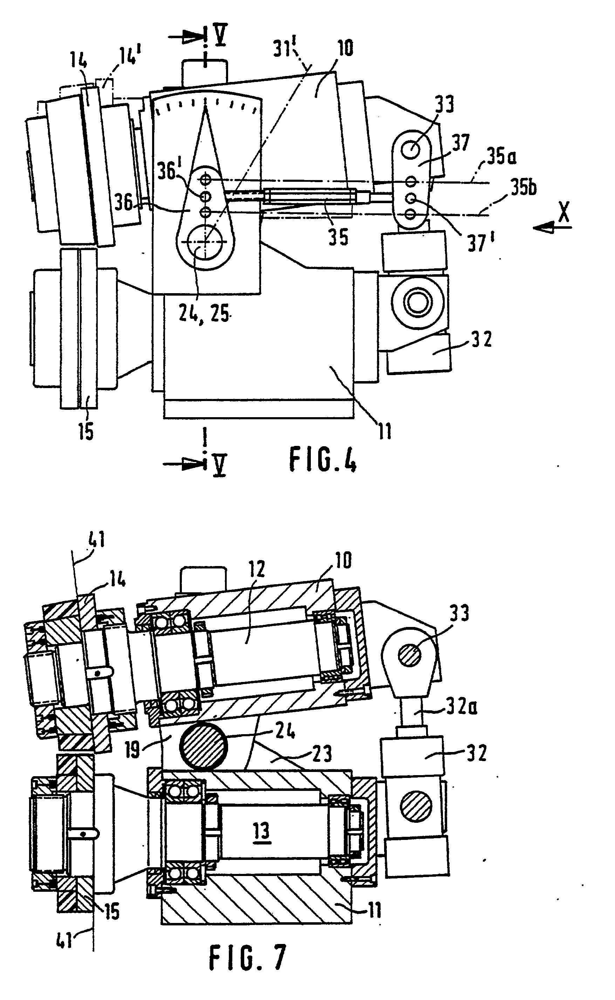

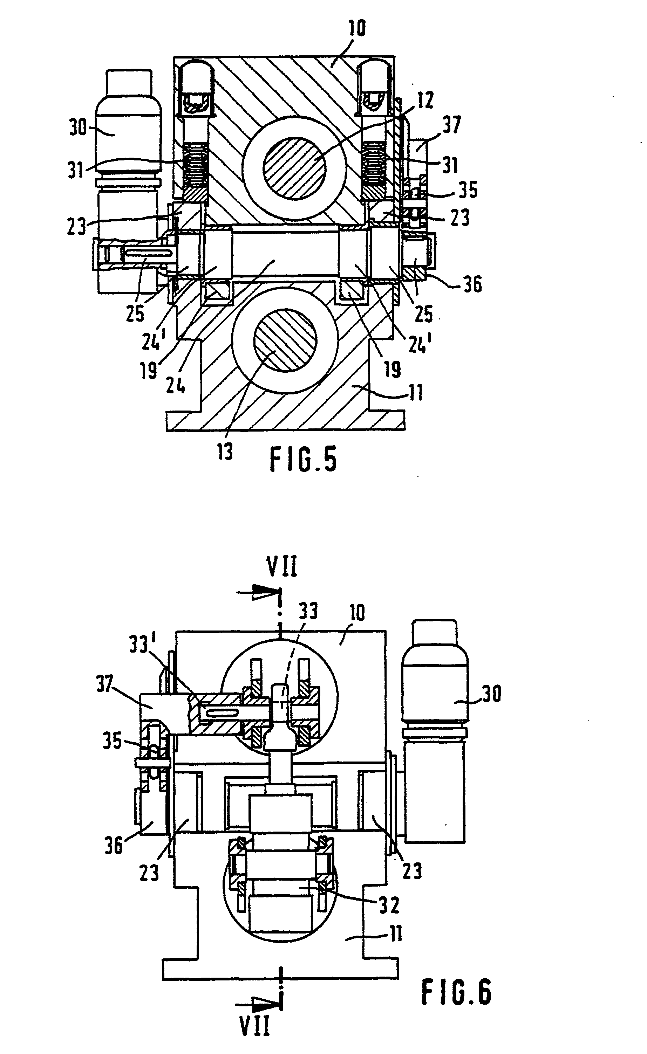

Die in Fig.4 - 7 dargestellte Kreismesserbesäumschere ist eine Weiterentwicklung der in Fig.1 dargestellten Schere mit dem Obermessergehäuse 10, dem Untermessergehäuse 11, den in den Gehäusen unverschieblich über Wälzlager gelagerten Kreismesserwellen 12 und 13, den Kreismessern 14,15 sowie dem Querexzenter 24 mit Exzenterachse 25. Fig.5 macht deutlich, daß der Querexzenter zwei Exzentrizitäten 24' hat, die in Wangen 19 des Obermessergehäuses 10 gelagert sind. Die abgesetzten Exzenterachsen 25 sind in äusseren Wangen 23 des Untermessergehäuses 11 gelagert. Zur definierten Drehverstellung des Querexzenters 24 ist ein Getriebemotor mit Bremse 30 vorgesehen. Zum Spielausgleich im Bereich der Lagerungen für den Querexzenter 24 sind in dem Obermessergehäuse 10 Druckstangen mit Federpaketen 31 vorgesehen, die auf gebogene Außenflächen der Wangen 23 des Untermessergehäuses 11 einen Druck ausüben und das Obermessergehäuse 10 nach oben drücken. Die Druckstangen mit Federpaketen 31 sind in Fig.5 winkelversetzt gezeichnet; tatsächlich sind diese Druckstangen entsprechend der strichpunktierten Linie 31' in Fig.4 geneigt in das Obermessergehäuse 10 eingesetzt.

Die wesentlichste Weiterentwicklung der Kreismesserschere nach Fig.4 bis 7 gegenüber derjenigen nach Fig.1 besteht darin, daß zwischen der Schwinge c, die als hydraulischer Stellzylinder ausgebildet ist, und dem Obermessergehäuse 10 (Koppel b) ein Überlagerungsexzenter 33 angeordnet ist.

Dieser Überlagerungsexzenter 33 ist mit dem Querexzenter 24 über eine längenveränderliche Gewindestange 35 getrieblich verbunden (Fig. 4), indem diese Gewindestange 35 sowohl mit einem sich aufwärts erstreckenden Hebel 36 des Querexzenters 24 als auch mit einem sich abwärts erstreckenden Hebel 37 des Überlagerungsexzenters 33 gelenkig verbunden ist. Fig. 5 zeigt die drehfeste Verbindung des Hebels 36 mit der Exzenterachse 25 des Querexzenters 24, wogegen Fig. 6 in einem Teilschnitt den drehfesten Anschluß des sich senkrecht erstreckenden Hebels 37 an die Exzenterachse 33' des Überlagerungsexzenters 33 zeigt.

Wie am besten aus Fig. 4 ersichtlich ist, sind die Hebel 36 und 37 mit jeweils drei Bohrungen 36' und 37' verse'hen, die von den Achsmitten der Exzenterachsen 25 bzw. 33' unterschiedliche radiale Abstände haben. In diese Bohrungen können die Gelenkzapfen der Gewindestange 35 wahlweise eingesetzt werden mit der Folge, daß das Übersetzungsverhältnis der getrieblichen Verbindung 35, 36, 37 zwischen den Exzentern 24 und 33 verändert werden kann.Außerdem kann selbstverständlich die wirksame Länge der Gewindestange 35 verändert werden, auch ohne daß die Gewindestange gegenüber der in Fig. 4 dargestellten mittleren Anschlußlage verlagert wird.

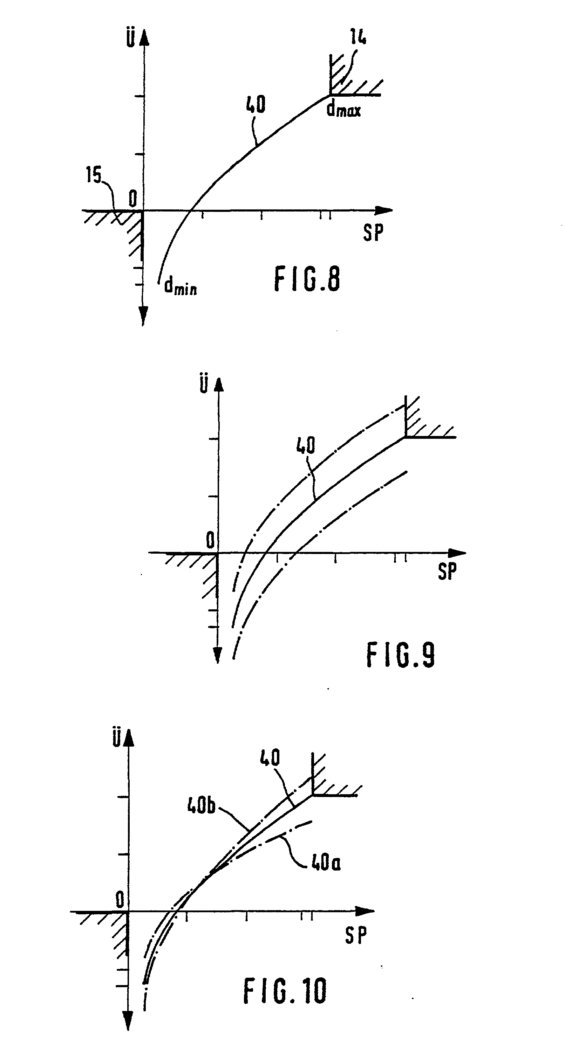

Die getriebliche Verbindung zwischen dem Querexzenter 24 und dem Überlagerungsexzenter 33 besteht darin, daß der Überlagerungsexzenter 33 in Ableitung von der Drehverstellung des Querexzenters 24 in einem wählbaren Ausmaß drehverstellt wird. Um dies näher zu erläutern, wird auf die Darstellungen der Schneidenbewegung nach Fig. 8 bis 10 verwiesen. Fig. 8 zeigt die Standard-Kennlinie 40 zwischen den Kreismessern 14, 15, der die Schneidkante des Obermessers 14 folgt, wenn die Gewindestange 35 in der mittleren Anschlußlage nach Fig. 4 ist, d. h. die Gewindestange 35 an die mittleren Bohrungen 36' bzw. 37' der Hebel 36 bzw. 37 angeschlossen ist. Wenn in dieser mittleren Anschlußlage die Länge der spannschloßartigen Gewindestange 35 verändert wird, ergibt sich eine Verschiebung der Kennlinie 40 gemäß Fig. 9 nach oben oder unten. Eine Verdrehung der Standard-Kennlinie 40 unter Änderung der Steilheit nach Fig. 10 ergibt sich, wenn die Gewindestange 35 ohne Änderung ihrer Wirklänge nach oben oder unten durch Umsetzen verlagert wird. Erstreckt sich die Gewindestange 35 entlang der Linie 35a, d. h. zwischen der Bohrung des Hebels 36 mit dem größten radialen Abstand und der Bohrung des Hebels 37 mit dem kleinsten radialen Abstand, ändern sich die Hebelarmverhältnisse gegenläufig mit der Folge, daß die Kennlinie 40a nach Fig. 10 mit der geringeren Steigung eingestellt ist. Unter der Anschlußlage der Gewindestange 35 nach der Linie 35b in Fig. 4 ändern sich die Hebelarmverhältnisse umgekehrt gegenläufig, was zu der steileren Kennlinie 40b führt.

Die veränderten Kennlinien nach Fig. 9 und 10 sind unter Umständen zur Anpassung an das zu besäumende Flachmaterial zweckmäßig, z. B. wenn die Materialfestigkeit oder -zähigkeit so stark unterschiedlich sind, daß saubere Schneidkanten mit der Standard-Kennlinie 40 nach Fig. 8 nicht zu erhalten sind.

Es wurde bereits erwähnt, daß die Kreismesserschere nach Fig. 4 bis 7 einen hydraulischen Stellzylinder 32 als Schwinge des Gelenkvierecks aufweist. Damit ist die Schwinge längenveränderlich, jedoch weniger, um die Schneidenanstellung zu beeinflussen, als um das Obermessergehäuse 10 aus der in Fig. 4 dargestellten relativ starken Neigungslage schnell um den Querexzenter 24 im Uhrzeigersinn zu verschwenken, wodurch die Kreismesser 14, 15 zum erleichterten Messerwechsel geöffnet werden. In Fig.4 ist die hochgeschwenkte Ausbaulage 14' des oberen Kreismessers 14 angedeutet. Für die Steuerung des hydraulischen Stellzylinders 32 bedeutet dies, daß dessen Kolbenstange 32a normalerweise bis zum Endanschlag ausgefahren ist und zur Schnellöffnung der Kreismesser eingezogen ist.

In diesem Zusammenhang und mit Bezug auf Fig.7 ist zu erwähnen, daß die Art der Messerbefestigung derjenigen nach Fig.4 der DE-A 3 421 331 entspricht, d.h. daß die ausschließlich planseitig geschliffenen Kreismesser 14, 15 stets an den unveränderlichen Anlageflächen 41 anliegen, die jeweils auf der Schneidseite angeordnet sind. Hierdurch ändert sich der Messerspalt SP nicht, wenn neue, nachgeschliffene Messer eingebaut werden. Das planseitige Nachschleifen der Kreismesser hat zur Folge, daß auch die Messerüberdeckung Ü beim Messerwechsel nicht verändert wird.

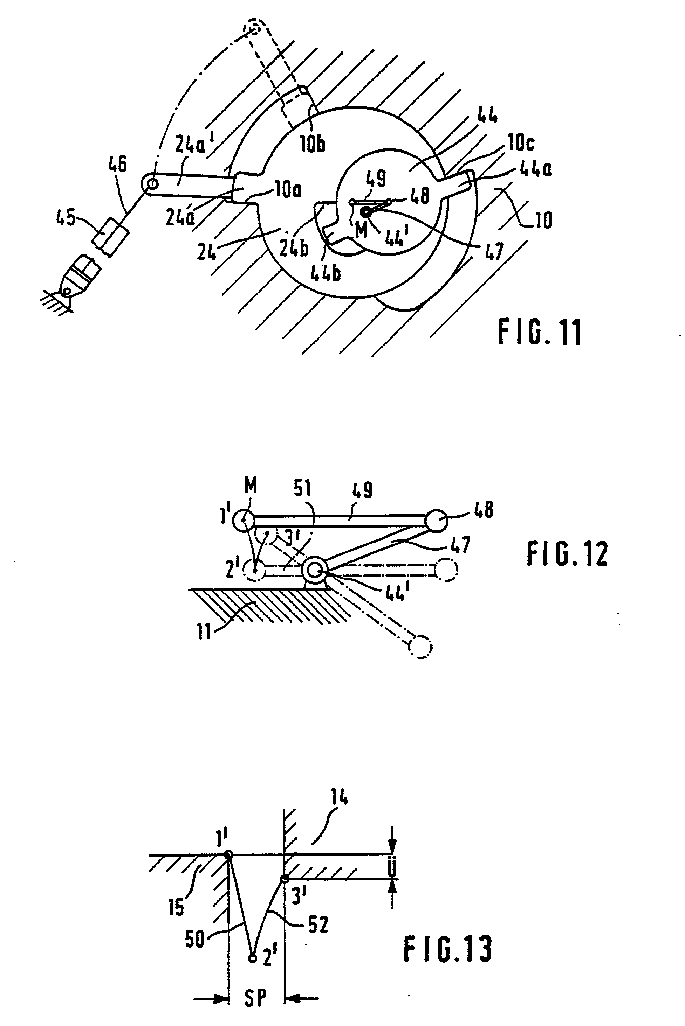

Wie schon ausgeführt, ist mit der Kreismesserschere nach Fig.1 oder Fig.4 bis 7 keine Kennlinie der Schneidkantenbewegung mit einem Umkehrpunkt bei größter positiver Messerüberdeckung zu erhalten, so daß diese Scherenbauarten nicht auf dem gesamten Materialdickenbereich auf optimale Erfahrungswerte der Schneidkanteneinstellung einstellbar sind. Um in Weiterentwicklung des Grundgedankens der Erfindung die Exzentersteuerung für die Schneidkantenbewegung mit nur einer Verstellung über den gesamten, bis 0,2 mm herabreichenden Materialdickenbereich durchgehend anzuwenden, wird der messerseitige Querexzenter als Doppelexzenter ausgebildet, der aus einem im Obermessergehäuse 10 gelagerten Hauptexzenter 24 und einem im Hauptexzenter exzentrisch gelagerten Innenexzenter 44 besteht (Fig.11). Der Hauptexzenter 24 ist wie der Querexzenter 24 nach Fig.2 durch seine Nase 24a zwischen den beiden gehäuseseitigen Anschlägen 10a und 10b begrenzt drehverstellbar, jedoch nicht durch einen reversierbaren positiven Drehantrieb. Auf den Hauptexzenter 24 wirkt lediglich eine in Richtung auf den gehäuseseitigen Anschlag 10a wirkende Krafteinrichtung ein, die über eine Verlängerung 24a' eine anstehende Momentenkraft erzeugt, die den Hauptexzenter 24 stets in die in Fig.11 dargestellte Ausgangslage zurückzuverstellen sucht. Die in Fig.11 schematisch angedeutete Krafteinrichtung ist ein verkürzt dargestellter Druckmittelzylinder 45, der pendelnd angeordnet ist und dessen Kolbenstange 46 an die Verlängerung 24a' angeschlossen ist. Die Krafteinrichtung kann selbstverständlich auch aus einer Zugfeder bestehen.

Der einzige reversierbare Drehverstellantrieb greift an der im Untermessergehäuse 11 gelagerten Exzenterachse 44' des Innenexzenters 44 an und kann aus einem Getriebemotor mit Bremse 30 gemäß Fig.5 bestehen.

Zur Erläuterung der kinematischen Verhältnisse ist zu beachten, daß der Innenexzenter 44 eine Exzentrizität 47 hat, wogegen der Hauptexzenter 24 gegenüber der Mittenachse 48 des Innenexzenters 44 eine Exzentrizität 49 hat. In der in Fig.11 dargestellten Ausgangslage der Exzentrizitäten steht der Innenexzenter 44 in Totpunktlage, da seine Exzentrizität 47 in der Ebene des gehäuseseitigen Anschlages 10c verläuft, der die Ausgangslage definiert.

In dieser Ausgangslage steht der Hauptexzenter 24 mit seiner Exzentrizität 49 ebenfalls in Totpunktlage, die dem gehäuseseitigen Anschlag 10a entspricht. Diese Verhältnisse sind in Fig. 12 schematisch wiedergegeben, in der die Exzenterbewegungen verdeutlicht sind.

Die Wirkungsweise des in Fig. 11 beschriebenen Doppelexzenters ist folgende:

Die in Fig. 11 dargestellte Ausgangslage entspricht einer Relation zwischen Obermesser 14 und Untermesser 15 bei einer Schneidkantenstellung 1'. Wenn zunächst der Innenexzenter 44 um den Drehwinkel im Uhrzeigersinn gedreht wird, der durch den Anschlag der Nase 44b an dem Anschlag 24b des Hauptexzenters 24 begrenzt ist, folgt die Schneidkante des Obermessers 14 der zwischen den Punkten 1' und 2' verlaufenden Kennlinie 50. Diese Schneidkantenbewegung kommt dadurch zustande, daß der Mittelpunkt M des Hauptexzenters 24 sich in Fig. 12 von 1' nach 2' bewegt und damit den Obermesserträger 10 verschwenkt, unter gleichzeitiger seitlicher Verlagerung aufgrund der Schwenkbarkeit der Schwinge 26 bzw. 32. Wie Fig. 12 zeigt, sind die beiden Exzentrizitäten 47 und 49 der Exzenter dann in Decklage gegenüber der Exzenterachse 44'. Bei einer weiteren Drehung des Innenexzenters 44 im Uhrzeigersinn wird der Hauptexzenter 24 über die Anschlagnase 44' mitgeschleppt, und zwar entgegen der vom Spannzylinder 45 ausgeübten anstehenden Momentenkraft. Bei dieser Phase der Schneidkantenbewegung wirken die beiden Exzenter 24 und 44 als Einheit, da die im Punkt 2' vorliegende Decklage der Exzentrizitäten 47 und 49 erhalten bleibt. Gegenüber der Exzenterachse 44' ist jetzt lediglich die Differenz zwischen den Exzentrizitäten 49 und 47, d. h. der Kurbelarm 51 wirksam (Fig. 12).

Dies ist zugleich die Exzentrizität des Hauptexzenters 24 gegenüber der gemeinsamen Exzenterachse 44' Da in der ersten Phase der Drehverstellung der Exzentrizität 47 des Innenexzenters 44 aus der Totpunktlage heraus der Mittelpunkt M des Hauptexzenters 24 mit dem Obermesserträger 10 die Schneidkantenbewegung nach Fig. 13 entsprechend der Kennlinie 50 abwärts unter Zunahme des Messerspaltes SP und der positiver Messerüberdeckung Ü bis zum Maximum 2' folgt. ..ndet bei der weiteren Verstellung beider Exzenter als Einheit eine Umkehr der Schneidkantenbewegung statt, da in der zweiten Phase der Drehbewegung der Kurbelarm 51 des Exzenters 24 im Sinne eines Zurückkippens des Obermessergehäuses 10 aus seiner anfänglichen Totpunktlage herausläuft, die in der ersten Phase der Drehverstellung nicht verändert wurde. Die Schneidkante des Obermessers 14 folgt von 2' nach 3' dem Bereich 52 der in Fig. 13 dargestellten Kennlinie 50, 52. Aus Fig. 11 und 12 geht im übrigen hervor, daß die Exzentrizität 47 des Innenexzenters 44 größer ist als der Kurbelarm 51 bzw. die Exzentrizität des Hauptexzenters 24 gegenüber der gemeinsamen Drehachse, der Exzenterachse 44'. Mit diesen Exzentrizitäten ist die Kreismesserbesaumschere zum Besäumen des gesamten Materialdickenbereiches von 0,2 bis 15 mm anwendbar, wobei die Schneidkantenstellung 2' für eine Materialdicke von 1,4 mm zutrifft. Mit zunehmender Materialdicke nimmt die positive Messerüberdeckung ab und gleichzeitig der Messerspalt SP zu.

Es versteht sich, daß die geschilderte Wirkungsweise des in Fig. 11 dargestellten Doppelexzenters auch für die umgekehrte Drehrichtung gültig ist, in der zunächst unter dem Einfluß der anstehenden Momentenkraft aus dem Spannzylinder 45 beide Exzenter 24 und 44 als Einheit aus der strichpunktiert dargestellten, durch den Anschlag 10b begrenzten Drehlage der Verlängerung 24a' der Hauptexzenter 24 im Gegenuhrzeigersinn zurückverstellt wird, wobei nunmehr der Innenexzenter 44 durch den Anschlag 24b des Hauptexzenters 24 mitgeschleppt wird. Der Drehantrieb für den Innenexzenter 44 läuft dabei wirkungslos mit oder wird durch eine Kupplung abgetrennt. Für die Schneidkantenbewegung von 2' nach 1' wird dann der Drehantrieb in umgekehrter Richtung eingesetzt.

**Patentansprüche**

1. Kreismesserschere zum Besäumen von Flachmaterial, insbesondere von Blechen und Bändern aus Metall, mit in einem Ober- und Untermessergehäuse (10, 11) gelagerten, die Kreismesser (14, 15) tragenden Kreismesserwellen (12, 13), wobei zur Einstellung des Messerspaltes und der Messerüberdeckung, positiv oder negativ, in Abhängigkeit von der Materialdicke und -festigkeit die obere Kreismesserwelle (12) sowohl axial als auch radial verlagerbar ist, dadurch gekennzeichnet, daß das Obermessergehäuse (10) die Koppel (b) eines Gelenkvierecks (a,b,c,d) ist, dessen Gestell (d) das Untermessergehäuse (11) ist und dessen Kurbel (a) aus einem quer zu den Kreismesserwellen (12,13) verlaufenden Exzenter (24) besteht, der am messerseitigen Ende des Obermessergehäuses angreift und dessen Exzenterhub sowie Totpunktlage so gewählt sind, daß jeder Punkt des oberen Kreismessers (14) bei einer reversierbaren Drehverstellung des Exzenters einer gewünschten Raumkurve folgt.

2. Kreismesserschere nach Anspruch 1, dadurch gekennzeichnet, daß der Verstellbereich des Querexzenters (24) durch gehäuseseitige Anschläge (10a,10b) begrenzt ist.

3. Kreismesserschere nach Anspruch 1, dadurch gekennzeichnet, daß zwischen der Schwinge (c) des Gelenkvierecks (a,b,c,d) und dem Obermessergehäuse (Koppel b) ein Überlagerungsexzenter (33) angeordnet ist, der unter Verwendung einer zwischen Hebeln (36,37) verlaufenden längenveränderlichen Gewindestange (35) getrieblich mit dem Querexzenter (24) verbunden ist.

4. Kreismesserschere nach Anspruch 3, dadurch gekennzeichnet, daß die getriebliche Verbindung einen aufwärts gerichteten, auf dem antriebsfreien Ende der Exzenterachse (25) des Querexzenters (24) drehfesten Hebel (36), einem abwärts gerichteten, auf der Exzenterachse (33') des Überlagerungsexzenters (33) drehfesten Hebel (37) und die zwischen beiden Hebeln angeordnete Gewindestange (35) umfasst, und daß die Gewindestange aus einer mittleren Anschlußlage unter gegenläufiger Änderung der Hebelarme der Hebel verlagerbar ist.

5. Kreismesserschere nach Anspruch 4, dadurch gekennzeichnet, daß die Hebel (36,37) mit mehreren Bohrungen (36',37') mit unterschiedlichen radialen Abständen von den Exzentermittenachsen zur verlagerbaren Aufnahme der Gewindestange (35) versehen sind.

6. Kreismesserschere nach einem der Ansprüche 1 bis 5, dadurch gekennzeichnet, daß die Schwinge (c) aus einem Stellzylinder (32) besteht, dessen Kolbenstange (32a) normalerweise in Endlage verriegelt und zur Schnellöffnung der Kreismesser (14,15) einziehbar ist.

7. Kreismesserschere nach Anspruch 1, dadurch gekennzeichnet, daß der Querexzenter als Doppelexzenter ausgebildet ist, der aus einem im Obermessergehäuse (10) gelagerten Hauptexzenter (24) und einem im Hauptexzenter exzentrisch gelagerten Innenexzenter (44) besteht, dessen im Untermessergehäuse (11) gelagerte Exzenterachse (44') relativ zum feststehenden Hauexzenter um einen vorgegebenen Drehwinkel drehverstellbar ist, wonach der Hauptexzenter mit dem Innenexzenter um dessen Exzenterachse (44') als Einheit drehverstellbar ist, oder umgekehrt, und daß die Exzenterhübe und Totpunktlagen des Hauptexzenters und des Innenexzenters so gewählt sind, daß bei einer aufeinanderfolgenden Drehverstellung von Innen- und Hauptexzenter (oder umgekehrt) die gewünschte Raumkurve (50,52) zwei Bereiche umfasst, die sich in einem Umkehrpunkt (2') der größten gewünschten Messerüberdeckung (Ü) treffen.

8. Kreismesserschere nach Anspruch 7, dadurch gekennzeichnet, daß in einer Ausgangslage der Kreismesser (14,15) mit einem Messerspalt (SP) und einer Messerüberdeckung (Ü) annähernd gleich Null sowohl der Hauptexzenter (24) als auch der Innenexzenter (44) in durch gehäuseseitige Anschläge (10a,10b) definierten Drehlagen sind, daß der Innenexzenter nach der Drehverstellung um den vorgegebenen Drehwinkel mit einer Anschlagnase (44b) an einem Gegenanschlag (24b) des Hauptexzenters anschlagend diesen über einen weiteren, durch einen gehäuseseitigen Anschlag (10b) begrenzten Drehwinkel entgegen einer anstehenden Momentenkraft mittschleppt, oder umgekehrt, daß in der Ausgangslage der Innenexzenter (44) etwa in einer Totpunktlage steht, aus der nach der Teildrehung des Innenexzenters um den vorgegebenen Drehwinkel seine Exzentrizität (47) mit der in Totpunktlage befindlichen Exzentrizität (49) des Hauptexzenters (24) in Decklage ist, in der beide Exzentrizitäten (47,49) bei der gemeinsamen Drehung der Exzenter verbleiben, wobei die Exzentrizität (47) des Hauptexzenters größer ist als die Exzentrizität (51) des Hauptexzenters gegenüber der gemeinsamen Exzenterachse (44').

## Claims

1. Circular blade shears for the trimming of flat material, in particular of metal plates and sheets and of tapes of metal, with circular blade shafts (12, 13), which carry the circular blades (14, 15) and are borne in an upper and a lower blade housing (10, 11), wherein the upper blade shaft (12) is repositionable axially as well as also radially for the setting of the blade gap and of the blade overlap (position or negative) in dependence on the thickness and the strength of the material, characterised thereby, that the upper blade housing (10) is the coupler (b) of a four-bar linkage (a, b, c, d), the frame (d) of which is the lower blade housing (11) and the crank (a) of which consists of an eccentric (24), which extends transversely to the circular blade shafts (12, 13) and engages at the blade end of the upper blade housing and the eccentric stroke as well as dead centre position of which are so chosen that every point of the upper circular blade (14) follows a desired three-dimensional curve during a reversible rotational adjustment of the eccentric.

2. Circular blade shears according to claim 1, characterised thereby, that the adjustment range of the transverse eccentric (24) is limited by abutments (10a, 10b) on the housing side.

3. Circular blade shears according to claim 1, characterised thereby, that a superposition eccentric (33) is arranged between the rocker (c) of the four-bar linkage (a, b, c, d) and the upper blade housing (coupler b) and in geared connection with the transverse eccentric (24) by the use of a threaded rod (35) of variable length extending between levers (36, 37).

4. Circular blade shears according to claim 3, characterised thereby, that the geared connection comprises an upwardly directed lever (36) secure against rotation on the undriven end of the eccentric axle (25) of the transverse eccentric (24), a downwardly directed lever (37) secure against rotation on the eccentric axle (33') of the superposition eccentric (33) and the threaded rod (35) arranged between the levers and that the threaded rod is repositionable out of a mean connecting position by oppositely directed changes of the lever arms of the levers.

5. Circular blade shears according to claim 4, characterised thereby, that the levers (36, 37) are provided with several bores (36', 37') at different radial spacings from the central axes of the eccentrics for the repositionable reception of the threaded rod (35).

6. Circular blade shears according to one of the claims 1 to 5, characterised thereby, that the rocker (c) consists of a setting cylinder (32), the piston rod (32a) of which is normally locked in the end position and retractable for the rapid opening of the circular blades (14, 15).

7. Circular blade shears according to claim 1, characterised thereby, that the transverse eccentric is constructed as double eccentric which consists of a main eccentric (24) borne in the upper blade housing (10) and an inner eccentric (44), which is eccentrically borne in the main eccentric and the eccentric axle (44') of which is borne in the lower blade housing (11) and adjustable rotationally through a preset angle relative to the stationary main eccentric, whereafter the main eccentric is adjustable rotationally as a unit with the inner eccentric around its eccentric axle (44') or conversely, and that the eccentric strokes and dead centre positions of the main eccentric and of the inner eccentric are so chosen that, for a successive rotational adjustment of the inner eccentric and of the main eccentric (or conversely), the desired threedimensional curve (50, 52) comprises two regions which meet in a turning point (2') of the greatest desired blade overlap (Ü).

8. Circular blade shears according to claim 7, characterised thereby, that in an initial position of the circular blades (14, 15) with a blade gap (SP) and a blade overlap (Ü) approximately equal to zero, the main eccentric (24) as well as also the inner eccentric (44) are in rotational positions defined by abutments (10a, 10b) on the housing side, that the inner eccentric after the rotational adjustment through the preset rotational angle and by an abutment lug (44b) abutting against a counterabutment (24b) of the main eccentric entrains this against a torque force and through a further rotational angle limited by an abutment (10b) on the housing side or conversely, that the inner eccentric (44) in the initial position stands in about a dead centre position, out of which — after the partial rotation of the inner eccentric through the preset rotational angle — its eccentricity (47) is in congruency with the eccentricity (49) of the main eccentric (24) disposed in dead centre position, in which both eccentricities (47, 49) remain during the common rotation of the eccentrics, wherein the eccentricity (47) of the main eccentric is greater than the eccentricity (51) of the main eccentric relative to the common eccentric axle (44').

**Revendications**

1. Cisaille à lames circulaires pour le cisaillage de rives de produits plats, notamment de tôles et de bandes de métal, qui comporte des arbres (12, 13) de lames circulaires montés sur paliers dans des enveloppes (10, 11) de lames supérieure et inférieure et portant les lames circulaires (14, 15) et dans laquelle, pour le réglage de l'écartement et de la superposition des lames (positive ou négative) en fonction de l'épaisser et de la résistance des produits l'arbre (12) de la lame supérieure peut être déplacé dans le sens radial et dans le sens axial, caractérisée en ce que l'enveloppe (10) correspond à l'élément (b) d'un rectangle articulé (a, b, c, d) dont le bâti (d) est constitué par l'enveloppe (11) de la lame inférieure, et dont la manivelle (a) est constituée par un excentrique (24) qui est orienté transversalement par rapport aux arbres (12, 13) des lames circulaires et est relié à l'extrémité de l'enveloppe de la lame supérieure qui se trouve du côté de la lame et dont la course d'excentrique ainsi que le point mort sont choisis de telle manière que chaque point de la lame circulaire supérieure (14) décrit, lorsque l'excentrique effectue un mouvement de rotation réversible, une courbe spatiale déterminée.

2. Cisaille à lames circulaires selon la revendication 1, caractérisée en ce que la zone de déplacement de l'excentrique (24) orienté transversalement est limitée par des butées (10a, 10b) situées du côté de l'enveloppe.

3. Cisaille à lames circulaires selon le revendication 1, caractérisée en ce qu'entre la bielle oscillante (c) du rectangle articulé (a, b, c, d) et l'enveloppe (élément b) de la lame supérieure, le dispositif comporte un excentrique de superposition (33) qui, par une barre filetée (35) de longueur variable intercalée entre des leviers (36, 37), est relié pour ses déplacements, à l'excentrique (24) orienté transversalement.

4. Cisaille à lames circulaires selon la revendication 3, caractérisée en ce que le dispositif assurant cette liaison pour les déplacements comprend un levier (36) dirigé vers le haut, monté sans possibilité de rotation relative sur l'extrémité de l'axe (25) de l'excentrique (24) orienté transversalement qui est située du côté entraînement, un levier (37) dirigé vers le bas, monté sans possibilité de rotation relative sur l'axe (33') de l'excentrique de superposition (33), et la barre filetée (35) qui est intercalée entre ces deux leviers et en ce que cette barre filetée peut être déplacée à partir d'une position de raccordement moyenne par modification, en sens opposés, des bras de levier des leviers.

5. Cisaille à lames circulaires selon la revendication 1, caractérisée en ce que les leviers (36, 37) comportent plusieurs alésages (36', 37') situés à des distances radiales différentes des axes médians des excentriques, de manière à permettre une réception de la barre filetée (35) à différents emplacements.

6. Cisaille à lames circulaires selon une des revendications 1 à 5, caractérisée en ce que la bielle oscillante (c) est constituée par un cylindre de réglage (33) dont la tige de piston est normalement verrouillée dans la position d'extrémité et peut être enfoncée pour permettre une ouverture rapide des lames circulaires (14, 15).

7. Cisaille à lames circulaires selon la revendication 1, caractérisée en ce que l'excentrique orienté transversalement est un excentrique double qui est constitué par un excentrique principal (24) monté sur paliers dans l'enveloppe (10) de la lame supérieure et par un excentrique intérieur (44) qui est monté excentriquement dans l'excentrique principal et dont l'axe d'excentrique (44') qui est monté sur palier dans l'enveloppe (11) de la lame inférieure peut tourner d'un angle déterminé par rapport à l'excentrique principal fixe, après quoi l'excentrique principal peut tourner, comme une unité, avec l'excentrique intérieur, autour de son axe d'excentrique (44') ou inversement et en ce que les courses d'excentrique et les points morts de l'excentrique principal et de l'excentrique intérieur sont choisis de telle manière que lors de déplacement successifs par rotation de l'excentrique intérieur et de l'excentrique principal (ou inversement), la courbe spatiale recherchée (50, 52) comporte deux parties qui se rencontrent en un point d'inversion (2') correspondant à la superposition maximale recherchée (U) des lames.

8. Cisaille à lames circulaires selon la revendication 7, caractérisée en ce que, dans une position de départ des lames circulaires (14, 15) pour laquelle l'écartement (SP) des lames et la superposition (U) des lames sont pratiquement égaux à zéro, l'excentrique principal (24) et l'excentrique intérieur (44) se trouvent dans des positions de rotation définies par des butées (10a, 10b) situées du côté de l'enveloppe, en ce qu'après le déplacement par rotation, de l'angle fixé, l'excentrique intérieur, par un bec de butée (44b) qui recontre une contre-butée (24b) de l'excentrique principal, entraîne celui-ci sur un angle de rotation limité par une autre butée (10b) située du côté de l'enveloppe en surmontant la force permanente d'un moment, ou inversement en ce que, dans la position de départ, l'excentrique intérieur (44) se trouve sensiblement à un point mort à partir duquel après que l'excentrique intérieur a tourné de l'angle de rotation fixé, son excentricité (47) coïncide avec l'excentricité (49) de l'excentrique principal (24) au point mort, les deux excentricités (47, 49) subsistant lors de la rotation commune et l'excentricité (47) de l'excentrique principal étant supérieure à l'excentricité (51) de l'excentrique principal rapportée à l'axe d'excentrique commun (44').

EP 0 289 799 B1

FIG.1

FIG.2

FIG.3

FIG.4

FIG. 7

FIG.5

FIG.6

FIG.8

FIG.9

FIG.10

FIG. 11

FIG.12

FIG.13